(19) Europäisches Patentamt
European Patent Office
Office européen des brevets

(11) **EP 4 636 378 A1**

(12) **EUROPEAN PATENT APPLICATION**
published in accordance with Art. 153(4) EPC

(43) Date of publication:
**22.10.2025 Bulletin 2025/43**

(21) Application number: 23903016.6

(22) Date of filing: **08.08.2023**

(51) International Patent Classification (IPC):
**G01M 99/00** (2011.01)     **G01M 13/021** (2019.01)
**G01M 13/028** (2019.01)

(52) Cooperative Patent Classification (CPC):
**G01M 13/021; G01M 13/028; G01M 99/00**

(86) International application number:
**PCT/JP2023/028937**

(87) International publication number:
**WO 2024/127710 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.12.2022 JP 2022201123**

(71) Applicant: **Nabtesco Corporation
Tokyo 102-0093 (JP)**

(72) Inventor: **FUJIMOTO, Nao
Tokyo 102-0093 (JP)**

(74) Representative: **Grünecker Patent- und
Rechtsanwälte
PartG mbB
Leopoldstraße 4
80802 München (DE)**

(54) **CONDITION MONITORING DEVICE AND STORAGE MEDIUM**

(57)    A condition monitoring device includes a first obtaining unit (201), a second obtaining unit (202), and an estimating unit (203). The first obtaining unit is provided in a joint portion of a pivotable arm and obtains a first physical quantity related to a machine element provided in the joint portion. The second obtaining unit is provided in a portion of the arm on a distal end from a base end side where the joint portion is disposed, and the second obtaining unit obtains a second physical quantity related to a motion state of the arm. The estimating unit estimates a condition of the machine element based on the first physical quantity obtained by the first obtaining unit and the second physical quantity obtained by the second obtaining unit.

[FIG. 2]

EP 4 636 378 A1

**Description**

TECHNICAL FIELD

The present invention relates to a condition monitoring device and a storage medium.

Priority is claimed on Japanese Patent Application No. 2022-201123, filed on December 16, 2022, the content of which is incorporated herein by reference.

BACKGROUND ART

Speed reducers have been provided in joints of arms that construction machines have. When a speed reducer deteriorates, it shows increased vibration than usual. Thus, for example, an acceleration sensor is used to determine abnormalities (failure or deterioration) of gears in the speed reducer. Vibration of the gears is small when the gears normally operate without deterioration and even when the gears are deteriorated. Therefore, it is necessary to focus on a specific frequency (target frequency) suitable for estimating gear failure among vibrations of various frequencies detected by the acceleration sensor, and to determine abnormalities from the magnitude of vibration at the target frequency.

The target frequency is determined, for example, by the number of teeth and rotation speed of the gear. The rotation speed of the gear can be obtained, for example, from a main machine. As a related technique, a method is disclosed in which a vibration value at a given rotation speed is corrected to a vibration value at a reference speed using an approximate formula representing relationship between the normal rotation speed of a rotating element and a vibration value of the rotating element, and an abnormality is determined when this corrected value exceeds a threshold (see, for example, Patent Document 1).

Citation List

Patent Document

Patent Document 1: Japanese Unexamined Patent Application, First Publication No. Hei 7-218333

SUMMARY OF INVENTION

Technical Problem

However, to obtain the target frequency from the main machine requires cumbersome wiring of signal lines from the main machine to the outside of the main machine. Thus, it is not possible to obtain the target frequency with a simple configuration. Therefore, the conventional art cannot estimate gear abnormalities with a simple configuration.

It is one object of the present invention is to provide a condition monitoring device that can estimate the condition of a machine element (e.g., the condition of a gear) with a simple configuration and a storage medium thereof.

Solution to Problem

A condition monitoring device according to one aspect of the invention includes: a first detection unit detecting a first physical quantity related to a machine element provided in a joint portion of a pivotable arm; a second detection unit provided on a distal end as opposed to a base end of the arm where the joint portion is disposed, the second detection unit detecting a second physical quantity related to a motion state of the arm; and an estimating unit estimating a condition of the machine element based on the first physical quantity detected by the first detection unit and the second physical quantity detected by the second detection unit.

With the above configuration, it is possible to estimate the condition of the machine element with a simple configuration, without having to obtain information from a main machine.

In the above configuration, the machine element may be a gear provided in the joint portion, the first physical quantity may be vibration of the gear, and the second physical quantity may be at least one of acceleration or angular velocity of the arm portion. The estimating unit may have a calculation unit that calculates a specific frequency of the vibration based on a number of teeth on the gear and a result of detection of the second physical quantity during a predetermined period of time when the arm portion is in motion. The estimating unit may estimate the condition of the gear using the calculated specific frequency and a result of detection of the first physical quantity during the predetermined period time.

According to the above configuration, the condition of the gear (e.g., abnormality of the gear) can be estimated with a simple configuration.

In the above configuration, the estimating unit may extract data corresponding to the calculated specific frequency from time series data of result of detection of the first physical quantity during the predetermined period, and estimates the condition of the gear based on the extracted data.

With the above configuration, it is possible to eliminate the need for large-scale operations such as FFT (Fast Fourier Transformation), thereby reducing power consumption. Therefore, the condition monitoring device can be applied to simple devices (e.g., smart sensors) that are powered by batteries.

In the above configuration, the estimating unit may perform filter processing to extract the data corresponding to the specific frequency from the time series data of the result of detection of the first physical quantity, and estimates the condition of the gear based on a result of comparing the extracted data with a predetermined threshold value.

According to the above configuration, the condition of the gear, for example, the presence or absence of an abnormality of the gear, can be estimated with a simpler configuration.

**In** the above configuration, the second physical quantity may be three-axis accelerations of the arm. The estimating unit may include a determining unit that specifies whether the arm is in a constant velocity state based on a result of comparing a composite value of the three-axis accelerations with a gravitational acceleration, the constant velocity state indicates that the arm is moving at a constant velocity. The estimating unit may estimate the condition of the machine element based on a result of detection performed by the first detection unit when the constant velocity state is determined.

According to the above configuration, the accuracy of the estimation of the condition of the machine element (e.g., abnormality estimation) can be improved.

In the above configuration, the determining unit may determine that the arm is in the constant velocity state when the composite value of the three-axis accelerations and the gravitational acceleration during a predetermined period of time match each other and a value of each of the three-axis accelerations during the predetermined period is indefinite.

With the above configuration, it is possible to determine the constant velocity state of the arm easily.

In the above configuration, the determining unit may determine a non-constant velocity state other than the constant velocity state based on the composite value of the three-axis accelerations and the gravitational acceleration. The estimating unit may not estimate the condition of the machine element in the non-constant velocity.

According to the above configuration, the accuracy of the estimation of the condition of the machine element (e.g., abnormality estimation) can be improved.

In the above configuration, when the composite value of the three-axis accelerations and the gravitational acceleration do not match each other, the determining unit may determine, as the non-constant velocity state, that the arm is in an acceleration/deceleration state indicating that the arm is moving in acceleration or deceleration.

With the above configuration, it is possible to determine an acceleration/deceleration state of the arm easily.

**In** the above configuration, the machine element may be a gear provided in the joint portion, the first physical quantity may be vibration of the gear, and the second physical quantity may include a rotation speed of the arm and three-axis accelerations of the arm. The estimating unit may include: a determining unit that determines whether the arm is in a constant velocity state based on a result of comparing a composite value of the three-axis accelerations with a gravitational acceleration, the constant velocity state indicating that the arm is moving at a constant velocity; and a calculation unit that calculates a specific frequency of the vibration based on information including at least a number of teeth on the gear and a rotation speed of the arm at a time when the constant velocity state is determined. The estimating unit may extract data corresponding to the calculated specific frequency from time series data of a result of detection of the first physical quantity, and estimates the condition of the gear based on the extracted data.

According to the above configuration, the constant velocity state of the arm can be easily determined and large-scale operations such as FFT can be eliminated, thus reducing power consumption. Therefore, the condition monitoring device can be applied to simple devices (e.g., smart sensors) that are powered by batteries.

Another aspect of the invention provides a computer-readable storage medium storing a program for causing a computer to operate as a condition monitoring device. The program causing a computer to function as: a first obtaining unit obtaining a first physical quantity related to a machine element provided in a joint portion of a pivotal arm from a first detection unit, the first detection unit being provided in the joint portion to detect the first physical quantity; a second obtaining unit obtaining a second physical quantity related to a motion state of the arm from a second detection unit provided on a distal end as opposed to a base end of the arm where the joint portion is disposed; and an estimating unit estimating a condition of the machine element based on the first physical quantity obtained by the first obtaining unit and the second physical quantity obtained by the second obtaining unit.

According to the above configuration, the condition of the gear (e.g., abnormality of the gear) can be estimated with a simple configuration, without having to obtain information from a main machine.

Advantageous Effects of Invention

According to the aspects of the invention, the condition of the gear (e.g., abnormality of the gear) can be estimated with a simple configuration.

BRIEF DESCRIPTION OF DRAWINGS

[FIG. 1] An explanatory drawing illustrating an example of a construction machine 1 relating to an embodiment.
[FIG. 2] A block diagram showing an example of functional configuration of a condition monitoring device 100.
[FIG. 3] A schematic drawing illustrating the condition monitoring device 100.
[FIG. 4] An explanatory drawing illustrating a hardware configuration of the condition monitoring device 100.

[FIG. 5] A flowchart showing a process performed by an estimation control unit 200.

[FIG. 6] A sequence diagram for abnormality estimation performed by the estimation control unit 200 and a variation sensor 24.

DESCRIPTION OF EMBODIMENTS

An embodiment of the present invention will now be described with reference to the appended drawings.

Construction Machine 1

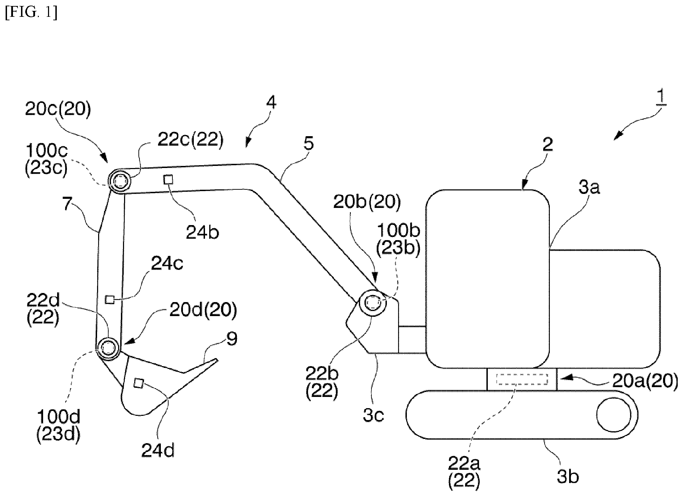

Fig. 1 illustrates an example of a construction machine 1 relating to an embodiment. As shown in Fig. 1, the construction machine 1 is, for example, an excavator, such as a power shovel. The construction machine 1 includes a main body 2, an arm portion 4 (an example of an arm), and rotating shaft portions 20 (an example of joint portions). The main body 2 includes a slewable structure 3a and an undercarriage 3b.

Arm Portion 4

The arm portion 4 includes a boom 5, a shovel arm 7, and a bucket 9. The boom 5 is connected to the main body 2 and can be pivotable relative to the main body 2. The shovel arm 7 is connected to the boom 5 and pivotable relative to the boom 5. The bucket 9 is connected to the shovel arm 7 and pivotable relative to the shovel arm 7.

Rotating Shaft Portions 20

The rotating shaft portions 20 include a first rotating shaft portion 20a, a second rotating shaft portion 20b, a third rotating shaft portion 20c, and a fourth rotating shaft portion 20d.

The first rotating shaft portion 20a rotatably connects the undercarriage 3b and the slewable structure 3a. The second rotating shaft portion 20b rotatably connects the slewable structure 3a (support portion 3c provided on the slewable structure 3a) and the boom 5. The third rotating shaft portion 20c rotatably connects the boom 5 and the shovel arm 7. The fourth rotating shaft portion 20d rotatably connects the shovel arm 7 and the bucket 9.

The second rotating shaft portion 20b is provided at a part of the support portion 3c that is connected with the boom 5 (or at a part of the boom 5 that is connected with the support portion 3c). The third rotating shaft portion 20c is provided at a part of the boom 5 that is connected with the shovel arm 7 (or a part of the shovel arm 7 that is connected with the boom 5). The fourth rotating shaft portion 20d is provided at a part of the shovel arm 7 that is connected with the bucket 9 (or a part of the bucket 9 that is connected with the shovel arm 7).

The rotational axis of the first rotating shaft portion 20a is perpendicular to the surface (e.g., the ground) with which the undercarriage 3b contacts. The rotational axes of the second, third, and fourth rotating shaft portions 20b, 20c, and 20d, respectively, are parallel to the plane with which the undercarriage 3b contacts.

Each rotating shaft portion 20 is provided with a rotary electric machine (not shown) and a speed reducer 22.

Specifically, a first rotary electric machine (not shown) and a first speed reducer 22a are provided in the first rotating shaft portion 20a. A second rotary electric machine (not shown) and a second speed reducer 22b are provided in the second rotating shaft portion 20b. A third rotary electric machine (not shown) and a third speed reducer 22c are provided in the third rotating shaft portion 20c. A fourth rotary electric machine (not shown) and a fourth speed reducer 22d are provided in the fourth rotating shaft portion 20d. The rotary electric machines are rotated by electricity (electric power).

Speed Reducer 22

The speed reducer 22 is a gear mechanism having two or more gears that mesh with each other.

The first speed reducer 22a drives and rotates the slewable structure 3a by power generated by the first rotary electric machine. Specifically, an input portion of the first speed reducer 22a is connected to an output portion of the first rotary electric machine. An output portion of the first speed reducer 22a is connected to the slewable structure 3a. The first speed reducer 22a reduces the rotation speed of the power inputted to its input portion from the first rotary electric machine and outputs the speed-reduced power from its output portion.

The second speed reducer 22b drives and rotates the boom 5 by power generated by the second rotary electric machine. Specifically, an input portion of the second speed reducer 22b is connected to an output portion of the second rotary electric machine. An output portion of the second speed reducer 22b is connected to the boom 5. The second speed reducer 22b reduces the rotation speed of the power inputted to its input portion from the second rotary electric machine and outputs the speed-reduced power from its output portion.

The third speed reducer 22c drives and rotates the shovel arm 7 by power generated by the third rotary electric machine. Specifically, an input portion of the third speed reducer 22c is connected to an output portion of the third rotary electric machine. An output portion of the third speed reducer 22c is connected to the shovel arm 7. The third speed reducer 22c reduces the rotation speed of the power inputted to its input portion from the third rotary electric machine and outputs the speed-reduced power from its output portion.

The fourth speed reducer 22d drives and rotates the bucket 9 by power generated by the fourth rotary electric machine. Specifically, an input portion of the fourth speed reducer 22d is connected to an output portion of the fourth rotary electric machine. An output portion of the fourth speed reducer 22d is connected to the bucket 9. The fourth speed reducer 22d reduces the rotation speed of the power inputted to its input portion from the fourth rotary electric machine and outputs the speed-reduced power from its output portion.

Condition Monitoring Device 100

The construction machine 1 is provided with a condition monitoring devices 100 (100b to 100d) that estimate abnormalities in the speed reducers 22. The condition monitoring devices 100 (100b to 100d) estimate conditions of the mechanical components of the speed reducer 22. Specifically, the condition monitoring devices 100 (100b to 100d) estimate the conditions (abnormal conditions) of the gears in the speed reducers 22.

The abnormalities estimated by the condition monitoring devices 100 include, for example, various states such as failure, deterioration, potential failure, degree of deterioration, and remaining usable period. It is possible to determine each of the various states by associating a threshold value (see below) to each of the various states.

The condition monitoring device 100 (100b to 100d) is provided on the rotating shaft portion 20 (20b to 20d).

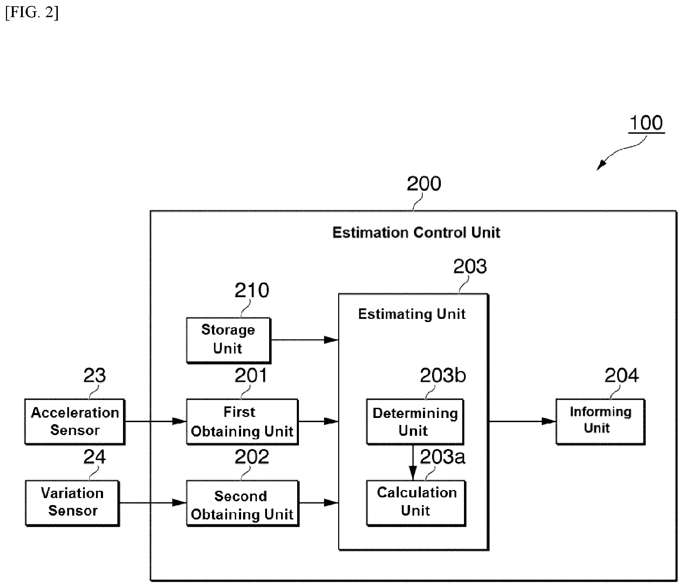

As shown in Figs. 1 and 2, the condition monitoring device 100 includes an acceleration sensor 23 (23b to 23d) and a variation sensor 24 (24b to 24d). The condition monitoring device 100 is, for example, a smart sensor and includes the acceleration sensor 23. The acceleration sensor 23 is an example of a first detection portion. The acceleration sensor 23 detects a first physical quantity related to wear of the gears in the speed reducer 22. The first physical quantity is, for example, acceleration in three axes. In addition to the three-axis acceleration, the acceleration sensor 23 is also capable of detecting angular velocity in the three axes.

The variation sensor 24 is an example of a second detection unit. The variation sensors 24 (24b to 24d) are provided in the arm portion 4 (boom 5, shovel arm 7, bucket 9).

The variation sensor 24 detects the second physical quantity related to the motional state of the arm portion 4. The second physical quantity is, for example, the angular velocity of the arm portion 4. In this embodiment, the variation sensor 24 is a sensor capable of detecting acceleration in the three axes and angular velocity in the three axes. For the acceleration sensor 23 and the variation sensor 24, a smart sensor in which both the sensors are integrated can be used.

Second Condition Monitoring Device 100d

The second condition monitoring device 100b that estimate abnormalities in the speed reducers 22 is provided in the second rotating shaft portion 20b. The second condition monitoring device 100b includes the second acceleration sensor 23b. The second acceleration sensor 23b detects vibration of the gears in the second speed reducer 22b. The second condition monitoring device 100b may be disposed in the case of the second speed reducer 22b (the case housing the two or more gears of the second speed reducer 22b).

The second variation sensor 24b is provided in the boom 5. The second variation sensor 24b is provided on a distal end of the boom 5 opposed to a base end of the arm where the second rotating shaft portion 20b is provided. Specifically, the second variation sensor 24b is provided in a tip portion of the boom 5 and situated at a position apart from the third rotating shaft portion 20c disposed at the tip of the boom 5 toward the base end side. The second variation sensor 24b detects the angular velocity of the boom 5.

Third Condition Monitoring Device 100c

The third condition monitoring device 100c that determines a failure (deterioration state) of the third speed reducer 22c is provided in the third rotating shaft portion 20c. The third condition monitoring device 100c includes the third acceleration sensor 23c. The third acceleration sensor 23c detects vibration of the gears in the third speed reducer 22c. The third condition monitoring device 100c may be disposed in the case of the third speed reducer 22c (the case housing the two or more gears of the third speed reducer 22c).

The third variation sensor 24c is provided in the shovel arm 7. The third variation sensor 24c is provided in a portion of the shovel arm 7 on a distal end of the arm opposed to a base end of the arm where the third rotating shaft portion 20c is provided. Specifically, the third variation sensor 24c is provided in a tip portion of the shovel arm 7 and situated at a position apart from the fourth rotating shaft portion 20d disposed at the tip of the shovel arm 7 toward the base end side. The third variation sensor 24c detects the angular velocity of the shovel arm 7.

Fourth Condition Monitoring Device 100d

The fourth condition monitoring device 100d that estimate an abnormality in the fourth speed reducer 22d is provided in the fourth rotating shaft portion 20d. The fourth condition monitoring device 100d includes the fourth acceleration sensor 23d. The fourth acceleration sensor 23d detects vibration of the gears in the fourth speed reducer 22d. The fourth condition monitoring device 100d may be disposed in the case of the fourth speed reducer 22d (the case housing the two or more gears of the fourth speed reducer 22d).

The fourth variation sensor 24d is provided in the bucket 9. The fourth variation sensor 24d is provided in a portion of the bucket 9 on a distal end side rather than a base end of the bucket where the fourth rotating shaft 20d is disposed. The fourth variation sensor 24d detects the angular velocity of the bucket 9.

Functional Configuration of Condition Monitoring Device 100

Fig. 2 is a block diagram showing an example of the functional configuration of the condition monitoring device 100.

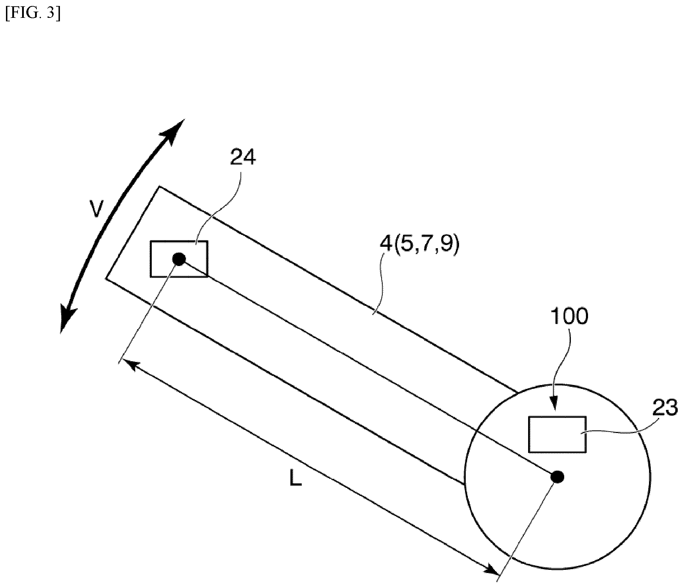

Fig. 3 schematically illustrates the condition monitoring device 100. In the following, an estimation control unit 200 of Fig. 2 will be described with reference to Fig. 3.

As shown in Fig. 2, the condition monitoring device 100 includes the estimation control unit 200, the acceleration sensor 23, and the variation sensor 24. The estimation control unit 200 includes a first obtaining unit 201, a second obtaining unit 202, an estimating unit 203, an informing unit 204, and a storage unit 210.

The first obtaining unit 201 obtains, from the acceleration sensor 23, vibration data (vibration values) of the gears provided in the speed reducer 22. Therefore, the acceleration sensor 23 works in conjunction with the first obtaining unit 201 to obtain the vibration data of the gears. Therefore, the first obtaining unit 201 functions as a first detection unit together with the acceleration sensor 23. The vibration data is time series data of the vibration detected by the acceleration sensor 23.

The second obtaining unit 202 acquires a rotation speed of the arm portion 4 calculated by the variation sensor 24. The variation sensor 24 obtains the rotation speed of the arm portion 4 in conjunction with the second obtaining unit 202. Thus, the second obtaining unit 202 and the variation sensor 24 function as the second detection unit.

Calculation of the rotation speed of the arm portion 4 will now be described. The rotation speed N is expressed by the following Formula 1, using distance L between the acceleration sensor 23 and the variation sensor 24 and angular velocity V. The variation sensor 24 stores the distance L in advance.

$$N = (V/2\pi L) \times 60 \ldots (1)$$

After the variation sensor 24 detects the angular velocity of the arm portion 4, the rotation speed of the arm portion 4 is calculated based on the detected angular velocity and Formula 1. The calculation of the rotation speed of the arm portion 4 may be performed by the second obtaining unit 202, for example.

The estimating unit 203 estimates whether there is an abnormality related to wear of the gears in the speed reducer 22 based on the vibration data obtained by the first obtaining unit 201 and the rotation speed obtained by the second obtaining unit 202. The estimation of the presence or absence of the abnormality related to wear of the gears in the speed reducer 22 may be hereunder referred to as "abnormality estimation".

The storage unit 210 stores thereon various information. The information stored by the storage unit 210 includes, for example, the number of teeth in the speed reducer 22 (the number of teeth on the two or more gears) and a threshold value used for comparison with the magnitude (amplitude) of the vibration at the target frequency. These information are referred in the abnormality estimation by the estimating unit 203. The storage unit 210 may also store results of the abnormality estimation along with the time when the abnormality estimation was performed.

Abnormality Estimation

The following describes a specific example of the abnormality estimation.

The estimating unit 203 includes a calculation unit 203a. The calculation unit 203a calculates a specific frequency (target frequency) to be used for the abnormality estimation. Specifically, the target frequency is calculated based on the rotation speed of the arm portion 4 obtained by the second obtaining unit 202 and the number of the gear teeth. More specifically, the calculation unit 203a calculates the target frequency by multiplying the rotation speed N obtained by the second obtaining unit 202 and the number of teeth T stored in the storage unit 210. In other words, the target frequency F is expressed by the following Formula 2.

$$F = N \times T \ldots (2)$$

Then, the estimating unit 203 extracts data corresponding to the target frequency calculated by the calculation unit 203a from time series data of the vibration obtained by the first obtaining unit 201. Specifically, the estimating unit 203 extracts the vibration data at the target frequency from the time series data of the vibrations at various frequencies by filter processing, for example. For example, a bandpass filter. a low-pass filter and the like is used in the filter processing. These filters may be realized in analog circuits or in software. The estimating unit 203 extracts the vibration data of the target frequency by changing a sampling rate or changing a moving average interval in the filter processing.

The estimating unit 203 then estimates the abnormality based on the extracted data. Specifically, the estimating unit 203 estimates the abnormality based on the result of comparing the extracted vibration data (vibration data at the target frequency) and the threshold value stored in the storage unit 210. More specifically, the estimating unit 203 compares the amplitude of the extracted vibration data (e.g., the root-mean-square of the amplitude) with the threshold value, and if the comparison result shows that the vibration data is above the threshold value, the estimating unit 203 presumes that there is an abnormality related to the gear wear.

The rotation speed of the arm portion 4 may be calculated by the calculation unit 203a, not limited to being calculated by the variation sensor 24. In this case, the second obtaining unit 202 can obtain the angular velocity of the arm portion 4 from the variation sensor 24. The calculation unit 203a can also calculate the rotation speed of the arm portion 4 based on the angular velocity obtained by the second obtaining unit 202 and the above Formula 1.

Informing Unit 204

The estimating unit 203 outputs a result of the estimation to the informing unit 204. The estimating unit 203 may be configured to output the result of the estimation to the informing unit 204 when it estimated that there is an abnormality and not to output the result of the estimation to the informing unit 204 when it estimated that there is no abnormality. The estimating unit 203 may also store the result of the estimation in the storage unit 210.

The estimating unit 203 may be configured to store the result of the estimation in the storage unit 210 when it estimated that there is an abnormality and not store the result of the estimation in the storage unit 210 when it estimated that there is no abnormality.

The informing unit 204 causes a predetermined output device to inform the result of the estimation outputted by the estimating unit 203. Specifically, when the estimating unit estimated that there is an abnormality, the informing unit 204 causes the predetermined output device to inform it. The predetermined output device includes a light emitting portion such as an LED, a speaker, or an external device. In other words, the informing unit 204 informs that there is an abnormality by light emitted from LEDs or the like, by sound from the speaker, or by the external device through communication.

The informing unit 204 may inform of the abnormality by at least one of the light emission, sound, or communication, or, for example, by all of these.

Timing for Abnormality Estimation

When the arm portion 4 is in a stop state where the arm portion stays still, no vibration is generated in the speed reducer 22. Thus, even if the abnormality estimation is performed, no abnormality will be estimated as a result. When the arm portion 4 is in an acceleration/deceleration state, the target frequency becomes indefinite because the acceleration/deceleration of the arm portion is added to the vibration detected by the acceleration sensor 23. In other words, when the arm portion 4 is in the stop state or acceleration/deceleration state, estimation of an abnormality cannot be performed accurately.

Therefore, in this embodiment, the abnormality estimation is performed when the arm portion 4 is in a constant velocity state. How to determine the constant velocity state of the arm portion 4 will now be described.

Determination of Constant Velocity State

The variation sensor 24 detects accelerations in three axes as the second physical quantity related to the motional state of the arm portion 4. The second obtaining unit 202 obtains the three-axis accelerations from the variation sensor 24. The estimating unit 203 is equipped with a determining unit 203b. The determining unit 203b determines whether the arm portion 4 is in the constant velocity state based on the result of comparison between the gravitational acceleration and the composite acceleration of the three-axis accelerations obtained by the second obtaining unit 202. The arm portion 4 moves at a lower speed (lower frequency) compared to the vibration of the speed reducer 22. Thus, the determining unit 203b determines whether the arm portion 4 is in a constant velocity state by extracting the acceleration related to the motion of the arm portion 4 using, for example, a low-pass filter.

The determining unit 203B determines that the arm portion is in the constant velocity state when the composite value of the three-axis accelerations and the gravitational acceleration during a predetermined period of time match each other and the acceleration value in each axis during the predetermined period is indefinite. The predetermined period is a predetermined period of time, for example, a few seconds.

When the X-, Y-, and Z-axis vibrations of the accelerations obtained by the second obtaining unit 202 are defined as Ax, Ay, and Az, respectively, the accelerations caused by the gravitational acceleration are defined as Gx, Gy, and Gz, and the accelerations caused by the motion of the speed reducer 22 are defined as Rx, Ry, and Rz, the vibration A is expressed by the following Formulas 3 to 5.

$$Ax = Gx + Rx\ldots(3)$$

$$Ay = Gy + Ry\ldots(4)$$

$$Az = Gz + Rz\ldots(5)$$

The composite of Gx, Gy, and Gz is expressed by Formula 6 below.

$$(Gx^2 + Gy^2 + Gz^2)^{1/2} = 9.8\mathrm{m/s}^2\ldots(6)$$

There is no acceleration/deceleration during the constant velocity state.
Rx = Ry = Rz = 0
Therefore, Formulas 3 to 5 above can be expressed as follows:

$$Ax = Gx$$
$$Ay = Gy$$
$$Az = Gz$$

Thus, the composite value of Ax, Ay, and Az is 9.8 m/s$^2$.

Since the arm portion 4 moves, the directions of the accelerations in the three axes detected by the variation sensor 24 become indefinite. In other words, the values of Ax, Ay, and Az (= Gx, Gy, and Gz) become indefinite. Thus, the determining unit 203b determines that the arm portion is in the constant velocity state when the conditions of "the composite value of Ax, Ay, and Az = 9.8 m/s$^2$" and "each of Ax, Ay, and Az = indefinite" are satisfied.

When the determining unit 203b determined that the arm portion is in the constant velocity state, the estimating unit 203 performs the abnormality estimation based on the detection result of the acceleration sensor 23. **In** other words, the estimating unit 203 estimates whether there is an abnormality related to wear of the speed reducer 22 based on the result of detection by the acceleration sensor 23 and the result of detection by the variation sensor 24.

**Determination** of Non-constant Velocity State

Next, determination of a non-constant velocity state will be described.

The determining unit 203b determines non-constant velocity states other than the constant velocity state based on the composite value of the accelerations in the three axes detected by the variation sensor 24 and the gravitational acceleration. Specifically, when the composite value of the three-axis accelerations and the gravitational acceleration do not match each other, the determining unit 203b determines, as the non-constant velocity state, that the arm is in an acceleration/deceleration state indicating that the arm portion is moving in acceleration or deceleration.

Determination of Acceleration/Deceleration States

In the acceleration/deceleration state, Rx, Ry, and Rz become indefinite. Since the arm portion 4 moves, the directions of the accelerations in the three axes detected by the variation sensor 24 become indefinite. In other words, the values of Ax, Ay, and Az (= Gx, Gy, and Gz) become indefinite.

Thus, the determining unit 203b determines that the arm portion is in the acceleration/deceleration state when the condition of "the composite value of Ax, Ay, and Az ≠ 9.8 m/s$^2$" is satisfied.

The estimating unit 203 does not perform the abnormality estimation when the determining unit 203b determined that the arm portion is in the acceleration/deceleration state.

Determination of Stop State

The determining unit 203B determines that the arm portion is in a stop state when the composite value of the three-axis accelerations and the gravitational acceleration during the predetermined period match each other and the acceleration value in each axis during the predetermined period is constant. Specifically, in the stop state, there is no acceleration or deceleration, which yields the following equation.

$$Rx = Ry = Rz = 0$$

Thus, Formulas 3 to 5 above are expressed as follows:

$$Ax = Gx$$
$$Ay = Gy$$
$$Az = Gz$$

Thus, the composite value of Ax, Ay, and Az is 9.8 m/s$^2$.

Since the arm portion 4 is not moving, the directions of the accelerations in the three axes detected by the variation sensor 24 do not change. Therefore, the values of Ax, Ay, and Az (= Gx, Gy, and Gz) are constant.

In other words, the determining unit 203b determines that the arm portion is in the stop state when the conditions of "the composite value of Ax, Ay, and Az = 9.8 m/s$^2$" and "each of Ax, Ay, and Az = constant" are satisfied.

The estimating unit 203 does not perform the abnormality estimation when the determining unit 203b determined that the arm portion is in the stop state.

Hardware Configuration of Condition Monitoring Device

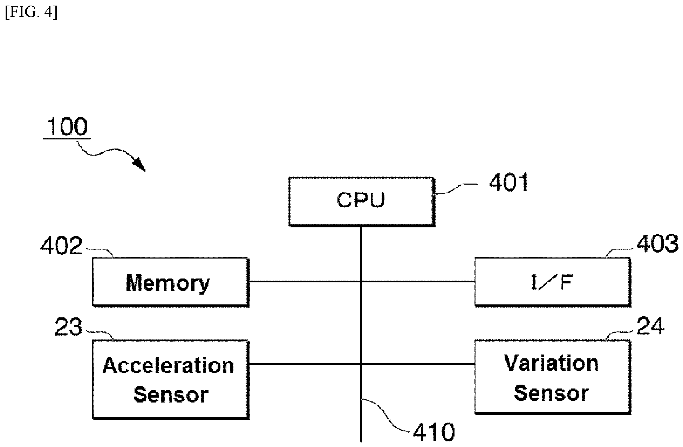

Fig. 4 illustrates a hardware configuration of the condition monitoring device 100. As shown in Fig. 4, the condition monitoring device 100 includes a CPU (Central Processing Unit) 401, a memory 402, an I/F (interface) 403, the acceleration sensor 23, and the variation sensor 24. These elements are connected by bus 410.

The CPU 401 performs overall control of the condition monitoring device 100. For example, the CPU 401 executes the processes of the first obtaining unit 201, the second obtaining unit 202, the estimating unit 203, and the informing unit 204 shown in Fig. 2. The CPU 401 may also control the operations of the acceleration sensor 23 and variation sensor 24.

The memory 402 is a generic term for storage devices such as ROM, RAM, USB (Universal Serial Bus) flash memory, SSD (Solid State Drive), and the like. For example, the storage unit 210 shown in Fig. 2 is formed of the memory 402.

The I/F 403 is a generic term for input I/F and output I/F (including communication I/F). For example, the second obtaining unit 202 obtains the angular velocity and acceleration of the arm 4 from the variation sensor 24 via the I/F 403 (communication I/F).

Various programs including an abnormality estimation program are stored in the memory 402. The CPU 401 executes the abnormality estimation program to realize the functions of the first obtaining unit 201, the second obtaining unit 202, the estimating unit 203, and the informing unit 204. In other words, the first obtaining unit 201, the second obtaining unit 202, the estimating unit 203, and the informing unit 204 are realized by the CPU 401.

Process Performed by Estimation Control Unit 200

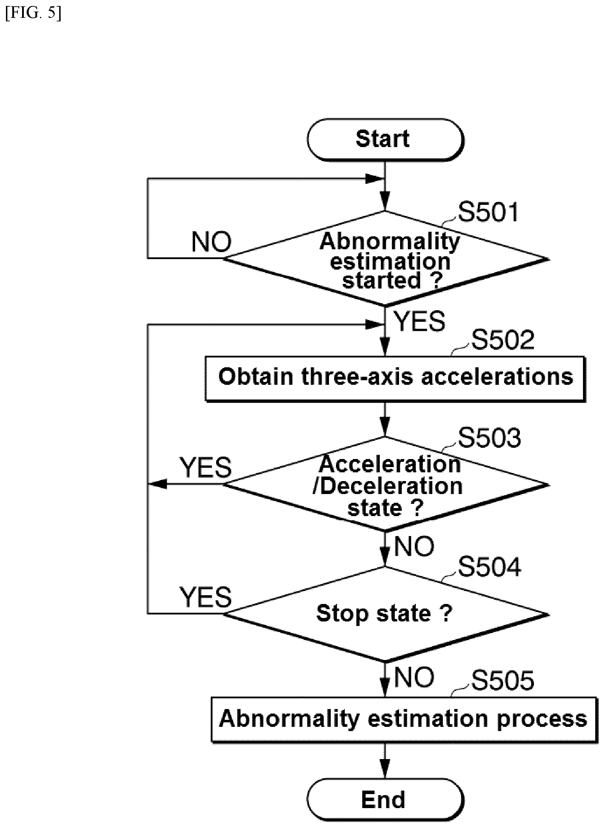

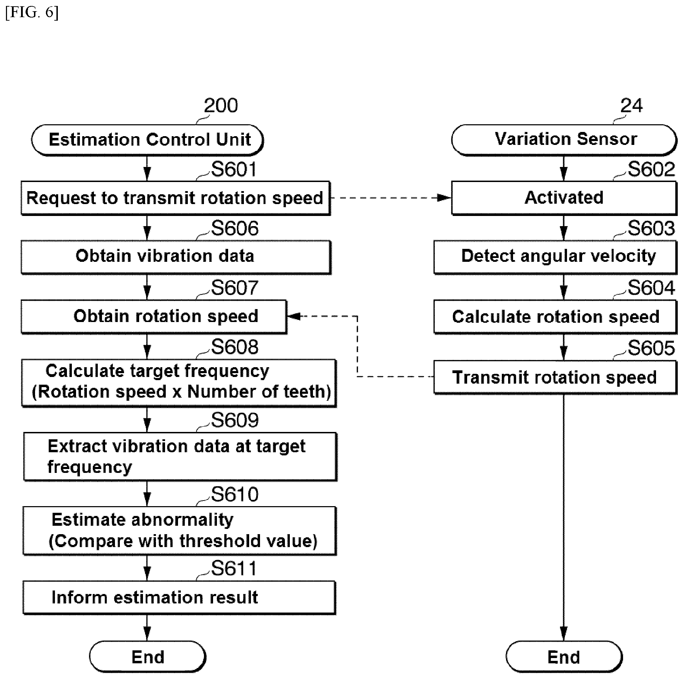

Fig. 5 is a flowchart showing a process performed by the estimation control unit 200.
In Fig. 5, the estimation control unit 200 determines whether the abnormality estimation has been started (step S501). When to start the abnormality estimation may be a predetermined timing (several times a day at the predetermined timing), or it may be a timing when there is input of the start instruction from an operator.
The estimation control unit 200 waits the start of the abnormality estimation (step S501: NO), and once the abnormality estimation is started (step S501: YES), it obtains the accelerations in the three axes detected by the variation sensor 24 (step S502).
Subsequently, the estimation control unit 200 determines whether the arm portion 4 is in the acceleration/deceleration state (the composite value of Ax, Ay, and $Az \neq 9.8\ m/s^2$) (step S503). When the arm portion 4 is in the acceleration/deceleration state (step S503: YES), the estimation control unit 200 returns to step S502. Whereas when the arm portion 4 is not in the acceleration/deceleration state (step S503: NO), the estimation control unit 200 determines whether the arm portion is in the stop state ("the composite value of Ax, Ay and $Az = 9.8\ m/s^2$" and "each of Ax, Ay and Az = constant") (step S504).
When the arm portion 4 is in the stop state (step S504: YES), the estimation control unit 200 returns to step S502. Whereas when the arm portion 4 is not in the stop state (step S504: NO), in other words, when the arm portion is in the constant velocity state ("the composite value of Ax, Ay, and $Az = 9.8\ m/s^2$" and "each of Ax, Ay, and Az = indefinite"), the abnormality estimation process (Fig. 6) is executed (step S505) and a series of the processes is completed.

Process Performed by Estimation Control Unit 200 and Variation Sensor 24

Fig. 6 is a sequence diagram for the abnormality estimation performed by the estimation control unit 200 and the variation sensor 24. The process performed by the estimation control unit 200 shown in Fig. 6 corresponds to the abnormality estimation process (step S505) shown in Fig. 5.
In Fig. 6, the estimation control unit 200 makes a request to the variation sensor 24 to transmit the rotation speed of the arm portion 4 (step S601). Once the variation sensor 24 receives the transmission request from the estimation control unit 200, it is activated (step S602) and detects the angular velocity of the arm portion 4 (step S603).
The variation sensor 24 then calculates the rotation speed of the arm portion 4 based on the detected angular velocity and the above Formula 1 (step S604). The variation sensor 24 then transmits the calculated rotation speed to the estimation control unit 200 (step S605) and ends the process. The estimation control unit 200 obtains the vibration data detected by the acceleration sensor 23 (step S606) after requesting the transmission of the rotation speed in step S601.
The estimation control unit 200 obtains the number of rotations of the arm portion 4 from the variation sensor 24 (step S607), and then calculates the target frequency by referring to the number of teeth stored in the storage unit 210 and multiplying that number of teeth by the rotation speed obtained in step S607 (step S608). The estimation control unit 200 then extracts the vibration data at the target frequency (step S609). Subsequently, the estimation control unit 200 estimates an abnormality related to wear of the gears (step S610). The estimation control unit 200 informs the estimation result (step S611), and the series of processes ends.

Advantageous Effects of the Embodiment

As explained above, the condition monitoring device 100 of the embodiment performs the abnormality estimation based on the result of detection (vibration data of the speed reducer 22) by the acceleration sensor 23 installed in the rotating shaft portion 20 and the result of detection (rotation speed of the arm portion 4) by the variation sensor 24 installed in the arm portion 4. In this way, it is possible to estimate an abnormality of the speed reducer 22 with such a simple configuration, without having to obtain information from the main machine.
Further, the condition monitoring device 100 of the embodiment performs the abnormality estimation based on the result of detection (vibration data of the speed reducer 22) by the acceleration sensor 23 installed in the rotating shaft portion 20 and the result of detection (three-axis acceleration of the arm portion 4) by the variation sensor 24 installed in the arm portion 4. This makes it possible to perform the abnormality estimation based on the result of detection by the acceleration sensor 23 at the optimum timing obtained from the three-axis acceleration of the arm portion 4 without obtaining information from the main machine. Therefore, an abnormality of the speed reducer 22 can be accurately estimated with such a simple configuration.
The condition monitoring device 100 calculates the target frequency based on the rotation speed of the arm 4 portion and the number of teeth on the gear, extracts data corresponding to the target frequency from the vibration data detected by the acceleration sensor 23, and performs the abnormality estimation based on the extracted data. This allows the condition monitoring device 100 to eliminate the need for large-scale operations such as FFT (Fast Fourier Transformation), thereby reducing power consumption.

Therefore, the condition monitoring device 100 can be applied to simple devices (e.g., smart sensors) that are powered by batteries.

The condition monitoring device 100 of the embodiment extracts data corresponding to the target frequency from the time series data of vibration by filter processing, and estimates the presence or absence of an abnormality based on the result of comparing the extracted data with the predetermined threshold value. In this way, it is possible to estimate the presence or absence of an abnormality with a simpler configuration.

The condition monitoring device 100 determines that the arm portion 4 is in the constant velocity state based on the result of comparing the composite value of the three-axis accelerations of the arm portion 4 with the gravity acceleration. The condition monitoring device 100 then estimates the presence or absence of an abnormality based on the result of detection by the acceleration sensor 23 at the point in time when it determined that the arm portion 4 is in the constant velocity state. This improves the accuracy of the abnormality estimation.

The condition monitoring device 100 determines that the arm portion is in the constant velocity state when the composite value of the three-axis accelerations of the arm portion 4 and the gravity acceleration during a predetermined period of time match each other and the acceleration value in each axis during the predetermined period is indefinite. In this way, it is possible to determine the constant velocity state easily.

The condition monitoring device 100 of the embodiment determines that the arm portion 4 is in the non-constant velocity state based on the composite value of the three-axis accelerations of the arm portion 4 and the gravitational acceleration, and does not estimate the presence or absence of abnormality in the non-constant velocity state. Since an abnormality cannot be accurately estimated in the non-constant velocity state, the device does not perform the abnormality estimation and thereby accuracy of the abnormality estimation can be improved.

The condition monitoring device 100 determines that the arm portion 4 is in the acceleration/deceleration state when the composite value of the three-axis accelerations of the arm portion 4 does not match the gravity acceleration. This makes it possible to easily determine the acceleration/deceleration state.

The condition monitoring device 100 determines that the arm portion 4 is in the constant velocity state based on the result of comparing the composite value of the three-axis accelerations of the arm portion 4 with the gravity acceleration. Furthermore, the condition monitoring device 100 calculates the target frequency based on the rotation speed of the arm portion 4 and the number of teeth on the gear in the constant velocity state. The condition monitoring device 100 then extracts the data corresponding to the target frequency from the time-series data of vibration detected by the acceleration sensor 23, and estimates the presence or absence of an abnormality based on the extracted data. This makes it possible to easily determine the constant velocity state and improve the accuracy of the abnormality estimation. In addition, the condition monitoring device 100 can eliminate the need for large-scale operations such as FFT, etc., thus reducing power consumption. Therefore, the condition monitoring device 100 can be applied to simple devices (e.g., smart sensors) that are powered by batteries.

Modification Examples of Embodiment

Modification examples of the embodiment will be now described below. In each of the following modification examples, description of the same components as the above-described embodiment will not be repeated. It is also possible to combine the above embodiment with the configurations shown in each modification example.

Modification Example 1

The above embodiment described an example in which the condition monitoring device 100 calculates the target frequency and extracts data corresponding to the target frequency from the time-series data of vibration detected by the acceleration sensor 23.

Alternatively, the condition monitoring device 100 of a modification example 1 may extract data corresponding to the target frequency by FFT analysis of the time-series data of vibration detected by the acceleration sensor 23.

However, in the modification example 1, as in the embodiment described above, the condition monitoring device 100 performs the abnormality estimation at the optimum timing (e.g., constant velocity state) based on the result of detection (three-axis accelerations of the arm portion 4) by the variation sensor 24 installed in the arm portion 4.

According to the modification example 1, the abnormality estimation based on the FFT analysis can be performed at the optimum timing obtained from the three-axis accelerations of the arm portion 4 without obtaining information from the main machine. Therefore, the estimation accuracy can be improved when FFT analysis is performed to estimate the abnormality of the speed reducer 22.

Modification Example 2

In the embodiment described above, an example in which the acceleration sensor 23 is used as the first detection unit has been described.

In the Modification Example 2, the condition monitoring device 100 may use an iron powder sensor as the first detection unit. The iron powder sensor is a sensor that detects the amount of iron powder (amount of wear) contained in the grease in the speed reducer 22. Since the iron powder in the reduction gear 22 tends to diffuse, for example, during the acceleration/deceleration state, the detection accuracy for the iron powder is expected to improve during the acceleration/deceleration state.

Therefore, the condition monitoring device 100 determines the acceleration/deceleration state based on the result of detection by the variation sensor 24 (three-axis accelerations of the arm portion 4), and once the state has been determined, the device performs the abnormality estimation based on the result of detection by the iron powder sensor.

In the modification example 2, the abnormality estimation based on the result of detection by the iron powder sensor can be performed at the optimum timing obtained from the three-axis accelerations of the arm portion 4 without obtaining information from the main machine. Therefore, the accuracy of the abnormality estimation for the speed reducer 22 can be improved.

Modification Example 3

In the embodiment described above, an example in which the variation sensor 24 is provided in the part of the arm portion 4 at a position apart from the rotating shaft portion 20 disposed at the tip of the arm portion toward the base end side.

The variation sensor 24 in the modification example 3 may be provided in the rotating shaft portion 20 of the arm portion 4 that is located on the distal end thereof.

Specifically, the third rotating shaft portion 20c is included in the boom 5 because it is provided at one end (tip) of the boom 5. Therefore, in the modification example 3, the second variation sensor 24b is provided in the third rotating shaft portion 20c, which is included in the boom 5.

The fourth rotating shaft portion 20d is included in the shovel arm 7 because it is provided at one end (tip) of the shovel arm 7. Therefore, in modification example 3, the third variation sensor 24c is provided in the fourth rotating shaft portion 20d, which is included in the shovel arm 7.

Both the second variation sensor 24b and the third variation sensor 24c are sensors capable of detecting the three-axis accelerations and the three-axis angular velocities. This allows the second variation sensor 24b not only to provide the function of detecting the rotation speed of the boom 5 (function of the second detection unit), but also serve the function of detecting the vibration of the third speed reducer 22c (gear at the joint between the boom 5 and the shovel arm 7) (function of the first detection unit).

Similarly, the third variation sensor 24c not only provides the function of detecting the rotation speed of the shovel arm 7 (function of the second detection unit), but also serves the function of detecting the vibration of the fourth speed reducer 22d (gear at the joint between the shovel arm 7 and the bucket 9) (function of the first detection unit).

According to the modification example 3, the number of sensors that serve as the first detection units can be reduced, and thus the configuration can be simplified.

Modification Example 4

In the above example, we described an example in which the result of the abnormality estimation is informed as it is.

In the modification example 4, an example of predicting an abnormality based on actual data from the abnormality estimation will be described. The following describes the example of predicting an abnormality using a learned model.

In the modification example 4, generation of a learned model when the rotation speed of the arm portion 4 and the vibration data of the speed reducer 22 are used as input samples and the learned model outputs the time period until maintenance of the speed reducer 22 (usable period: one month remaining, two months remaining, ...) as output samples will be described.

The learned model is generated by a learning device such as a PC. The learning device uses prepared data sets to learn parameters of a classification model such as a neural network. As the data sets, actual data of various detection and estimation results by the condition monitoring device 100 is used. The classification model has an input unit, a feature calculation unit, a classification unit, and an output unit. The input unit receives the rotation speed of the arm portion 4 and the vibration data of the speed reducer 22 and outputs them as a vector to the feature calculation unit. The input unit constitutes an input layer of the neural network.

The feature calculation unit and the classification unit are an intermediate layer of the neural network. The output unit is the output layer of the neural network. The feature calculation unit converts the vector inputted from the input unit into a low-dimensional feature vector and outputs it to the classification unit. The classification unit converts the feature vector inputted from the feature calculation unit into a P-dimensional vector indicating the posterior probability of the usable periods represented by the feature vector. Here, P is the number of usable periods to be estimated.

The learning device obtains a training data set that associates the rotation speed of the arm portion 4 with the vibration data of the speed reducer 22, which are the input sample. The rotation speed of the arm portion 4 and the vibration data of the speed reducer 22 are represented by a P-dimensional one-hot vector, where P is the number of usable periods in the data set.

Using the obtained training data set, the learning device causes leaning of the parameters of the classification model so that when the rotation speed of the arm portion 4 and the vibration data of the speed reducer 22 are inputted, the P-dimensional vector indicating the posterior probability of the usable periods are outputted. Specifically, the learning device causes learning of the parameters of the classification model using the obtained data set. At this time, the learning device updates the parameters of the feature calculation unit and the classification unit in the classification model.

More specifically, the learning device updates each parameter using a gradient descent method to minimize a loss function using the calculation results by the classification model. For example, the loss function represents a cross-entropy error between the output value of the classification model and the output sample of the data set. When an evaluation value of the loss function falls below a predetermined threshold or when the learning process is repeated a predetermined number of times, the learning process is terminated and the learned model is generated.

By inputting the rotation speed of the arm portion 4 and the vibration data of the speed reducer 22 into this learned model, an estimate value can be calculated and the usable period with a high estimate value can be outputted.

The generated learned model may be stored in another device (e.g., a server) different from the condition monitoring device 100. **In** this case, when the condition monitoring device 100 detects the rotation speed of the arm portion 4 and the vibration data of the speed reducer 22, it sends the detection results to the other device that stores the learned model. The other device determines the usable period based on the detection results and outputs the determined usable period. The outputted usable period is displayed, for example, on a display of the construction machine 1 or on a personal computer installed in a maintenance facility for the construction machine 1.

Alternatively, the learned model may be stored in the condition monitoring device 100. In this case, the condition monitoring device 100 can determine the usable period based on the detection results and output the determined usable period.

According to the modification example 4, the usable periods can be determined based on the rotation speed of the arm portion 4 and the vibration data of the speed reducer 22 detected by the condition monitoring device 100 using the learned model. **In** addition, it is possible to predict an abnormality of the speed reducer 22 with such a simple configuration, without having to obtain information from the main machine.

**In** the modification example 4, the example in which the output samples are the usable periods has been described. Alternatively, it is also possible to use the output sample as time for replacement (e.g., year and month).

Other Examples

The above embodiment described an example in which the speed reducer 22 is a gear mechanism having the two or more gears. The speed reducer 22 may have pins (internal gear pins) in addition to the gears. For example, the speed reducer 22 may have a plurality of pin grooves formed on the inner surface of the case to receive the plurality of internal gear pins, and the gear mechanism (e.g., one or more oscillating gears) in the case may be configured to engage with the plurality of internal gear pins.

The pin grooves or pins may be considered as a part of the gear mechanism. For example, the plurality of pin grooves may be referred to as a gear and each pin may be referred to as a tooth. For example, the number of the pins may be included in the number of the teeth. In the case where the number of the teeth does not include the number of the pins, the target frequency is obtained by multiplying the rotation speed of the arm portion 4, the number of the teeth of the gear, and the number of the pins.

The above embodiment described an example in which the condition monitoring device 100 is applied to the construction machine 1. Alternatively, the condition monitoring device 100 may be applied to a robot (e.g., a six-axis robot). The robot is, for example, an industrial robot.

In this case, the condition monitoring device 100 detects the first physical quantity related to wear of gears in a joint potion of the robot arm and the second physical quantity related to the motion state of the tip side of the robot arm, and based on these detection results, estimates whether there is an abnormality related to wear of the gears.

The foregoing is the description of the embodiments of the present invention with reference to the drawings. Specific configurations are not limited to the above embodiments but include design modifications within the purport of the present invention.

According to the foregoing embodiments disclosed herein, a plurality of functions may be distributively provided. Some or all of these functions may be integrally provided. Conversely, a different plurality of functions may be integrally provided. Some or all of these functions can be distributively provided. Irrespective of whether the functions are integrally or distributively provided, they are acceptable as long as they are configured to attain the object of the invention.

In the embodiment, the gear has been described as an example of the machine element provided in the joint portion of the arm portion 4, but it is not limited to gears. For example, the machine element can be a bearing or motor provided in the joint portion.

Furthermore, in the embodiment, the vibration of the gears has been described as an example of the first physical quantity related to the machine element, but it is not limited to this case. For example, current of a motor (machine element) can be used as the first physical quantity. In this case, for example, the rotation speed of the arm portion 4 may be used as the second physical quantity related to the motion state of the arm portion 4. In this case, for example, an amplitude value of the frequency of the motor current determined from the rotation speed may be monitored to estimate a predictive failure of the motor (condition of the machine element).

A program for realizing the functions of the device (for example, the condition monitoring device 100) of the embodiment described above may be stored on a computer-readable storage medium, and the program stored on the storage medium may be loaded onto a computer system that then executes the program for processing.

The "computer system" mentioned above may include an operating system (OS) or hardware such as peripheral devices. The "computer-readable storage medium" mentioned above refers to a storage device such as a portable medium like a flexible disc, a magneto-optical disc, a ROM (Read Only Memory), a flash memory or other writable non-volatile memory, and a DVD (Digital Versatile Disc), and a hard disk built-in to the computer system.

Further, the "computer-readable storage medium" includes storage media that retain the program for some period of time, like a volatile memory (for example, DRAM (Dynamic Random Access Memory)) in an information processing device receiving the program through a network such as the Internet or a communication line such as a telephone line, or in a computer system that operates as a client. The program mentioned above may be transmitted from a computer system that includes a storage device or the like storing the program to another computer system through a transmission medium or by a transmission wave in a transmission medium.

The "transmission medium" for transmitting the program refers to a medium that operates to transmit information, like a network (communication network) such as the Internet or a communication line (communication wire) such as the telephone line.

Only a part of the functions described above may be implemented in the above program. Further, the functions described above may be implemented by a combination of the above program and other programs previously stored on the computer system. That is, the above program may be what is called a difference file (a difference program).

INDUSTRIAL APPLICABILITY

According to the invention, the condition of the machine element (e.g., gear abnormality) can be estimated with a simple configuration.

REFERENCE SIGNS LIST

1 construction machine
2 Main body
4 Arm portion
5 Boom
7 Shovel arm
9 Bucket
20 Rotating shaft portion
22 Speed reducer
23 Acceleration sensor
24 Variation sensor
100 Condition monitoring device
200 Estimation control unit
201 First obtaining unit
202 Second obtaining unit
203 Estimating unit
203a Calculation unit
203b Determining unit
204 Informing unit

Claims

1. A condition monitoring device, comprising:

a first detection unit provided in a joint portion of a pivotable arm, the first detection unit detecting a first physical quantity related to a machine element provided in the joint portion;
a second detection unit provided on a distal end as opposed to a base end of the arm where the joint portion is disposed, the second detection unit detecting a second physical quantity related to a motion state of the arm; and
an estimating unit estimating a condition of the machine element based on the first physical quantity detected by the first detection unit and the second physical quantity detected by the second detection unit.

2. The condition monitoring device of claim 1, wherein the machine element is a gear provided in the joint portion,

wherein the first physical quantity is vibration of the gear,
wherein the second physical quantity is at least one of acceleration or angular velocity of the arm,
wherein the estimating unit includes a calculation unit that calculates a specific frequency of the vibration based on a number of teeth on the gear and a result of detection of the second physical quantity during a predetermined period of time when the arm is in motion, and
wherein the estimating unit estimates the condition of the gear using the calculated specific frequency and a result of detection of the first physical quantity during the predetermined period time.

3. The condition monitoring device of claim 2, wherein the estimating unit extracts data corresponding to the calculated specific frequency from time series data of the result of detection of the first physical quantity during the predetermined period, and estimates the condition of the gear based on the extracted data.

4. The condition monitoring device of claim 3, wherein the estimating unit performs filter processing to extract the data corresponding to the specific frequency from the time series data of the result of detection of the first physical quantity, and estimates the condition of the gear based on a result of comparing the extracted data with a predetermined threshold value.

5. The condition monitoring device of any one of claims 1 to 4, wherein the second physical quantity is three-axis accelerations of the arm,

wherein the estimating unit includes a determining unit that determines whether the arm is in a constant velocity state based on a result of comparing a composite value of the three-axis accelerations with a gravitational acceleration, the constant velocity state indicates that the arm is moving at a constant velocity, and
wherein the estimating unit estimates the condition of the machine element based on a result of detection performed by the first detection unit at a time when the constant velocity state is determined.

6. The condition monitoring device of claim 5, wherein the determining unit determines that the arm is in the constant velocity state when the composite value of the three-axis accelerations and the gravitational acceleration during a predetermined period of time match each other and a value of each of the three-axis accelerations during the predetermined period is indefinite.

7. The condition monitoring device of claim 5 or 6, wherein the determining unit determines a non-constant velocity state other than the constant velocity state based on the composite value of the three-axis accelerations and the gravitational acceleration, and wherein the estimating unit does not estimate the condition of the machine element in the non-constant velocity.

8. The condition monitoring device of claim 7, wherein when the composite value of the three-axis accelerations and the gravitational acceleration do not match each other, the determining unit determines, as the non-constant velocity state, that the arm is in an acceleration/deceleration state indicating that the arm is moving in acceleration or deceleration.

9. The condition monitoring device of claim 1, wherein the machine element is a gear provided in the joint portion,

wherein the first physical quantity is vibration of the gear,
wherein the second physical quantity includes a rotation speed of the arm and three-axis accelerations of the arm.
wherein the estimating unit includes:

a determining unit determining whether the arm is in a constant velocity state based on a result of comparing a composite value of the three-axis accelerations with a gravitational acceleration, the constant velocity state indicating that the arm is moving at a constant velocity; and
a calculation unit calculating a specific frequency of the vibration based on information including at least a number of teeth on the gear and a rotation speed of the arm at a time when the constant velocity state is determined,

wherein the estimating unit extracts data corresponding to the calculated specific frequency from time series data of a result of detection of the first physical quantity, and estimates the condition of the gear based on the extracted data.

10. A computer-readable storage medium storing a program for causing a computer to operate as a condition monitoring device,
the program causing the computer to function as:

a first obtaining unit obtaining a first physical quantity related to a machine element provided in a joint portion of a pivotal arm from a first detection unit, the first detection unit being provided in the joint portion to detect the first physical quantity;
a second obtaining unit obtaining a second physical quantity related to a motion state of the arm from a second detection unit provided on a distal end as opposed to a base end of the arm where the joint portion is disposed; and
an estimating unit estimating a condition of the machine element based on the first physical quantity obtained by the first obtaining unit and the second physical quantity obtained by the second obtaining unit.

[FIG. 1]

[FIG. 2]

[FIG. 3]

[FIG. 4]

[FIG. 5]

```
                    ┌──────────┐
                    │  Start   │
                    └────┬─────┘
                         │
       ┌─────────────────┤
       │                 ▼
       │         ╱╲  S501
      NO       ╱    ╲
     ◄────────╱ Abnormality ╲
              ╲ estimation  ╱
               ╲ started ? ╱
                ╲         ╱
                 ╲   ▼   ╱
                  YES
                   │          S502
                   ▼
       ┌─────────────────────────────┐
       │ Obtain three-axis accelerations │
       └──────────────┬──────────────┘
                      │          S503
                      ▼
              ╱╲
     YES    ╱    ╲
    ◄──────╱ Acceleration ╲
           ╲ /Deceleration ╱
            ╲  state ?    ╱
             ╲          ╱
              ╲   ▼    ╱
               NO        S504
                │
                ▼
              ╱╲
     YES    ╱    ╲
    ◄──────╱ Stop state ? ╲
           ╲            ╱
            ╲   ▼      ╱
             NO         S505
              │
              ▼
   ┌──────────────────────────────┐
   │ Abnormality estimation process │
   └───────────────┬──────────────┘
                   │
                   ▼
            ┌──────────┐
            │   End    │
            └──────────┘
```

[FIG. 6]

```
        200                                          24
┌─────────────────────────┐          ┌─────────────────────────┐
│  Estimation Control Unit │          │    Variation Sensor     │
└─────────────────────────┘          └─────────────────────────┘
              │  S601                               │  S602
              ▼                                     ▼
┌─────────────────────────────┐ ---→ ┌─────────────────────────┐
│ Request to transmit rotation │     │        Activated        │
│           speed             │      └─────────────────────────┘
└─────────────────────────────┘                   │  S603
              │  S606                               ▼
              ▼                      ┌─────────────────────────┐
┌─────────────────────────────┐     │  Detect angular velocity │
│     Obtain vibration data    │     └─────────────────────────┘
└─────────────────────────────┘                   │  S604
              │  S607                               ▼
              ▼                      ┌─────────────────────────┐
┌─────────────────────────────┐ ←-- │  Calculate rotation speed│
│      Obtain rotation speed   │     └─────────────────────────┘
└─────────────────────────────┘                   │  S605
              │  S608                               ▼
              ▼                      ┌─────────────────────────┐
┌─────────────────────────────┐ --- │  Transmit rotation speed │
│   Calculate target frequency │     └─────────────────────────┘
│ (Rotation speed x Number of  │                  │
│          teeth)             │                   │
└─────────────────────────────┘                   │
              │  S609                               │
              ▼                                     │
┌─────────────────────────────┐                    │
│  Extract vibration data at   │                    │
│       target frequency       │                    │
└─────────────────────────────┘                    │
              │  S610                               │
              ▼                                     │
┌─────────────────────────────┐                    │
│     Estimate abnormality     │                    │
│ (Compare with threshold value)│                   │
└─────────────────────────────┘                    │
              │  S611                               │
              ▼                                     │
┌─────────────────────────────┐                    │
│   Inform estimation result   │                    │
└─────────────────────────────┘                    │
              │                                     ▼
              ▼                      ┌─────────────────────────┐
┌─────────────────────────────┐     │           End           │
│            End               │     └─────────────────────────┘
└─────────────────────────────┘
```

## INTERNATIONAL SEARCH REPORT

| International application No. |
| --- |
| **PCT/JP2023/028937** |

| A. | CLASSIFICATION OF SUBJECT MATTER |
| --- | --- |

*G01M 99/00*(2011.01)i; *G01M 13/021*(2019.01)i; *G01M 13/028*(2019.01)i
FI:    G01M13/021; G01M13/028; G01M99/00 Z

According to International Patent Classification (IPC) or to both national classification and IPC

| B. | FIELDS SEARCHED |
| --- | --- |

Minimum documentation searched (classification system followed by classification symbols)

G01M99/00; G01M13/021; G01M13/028

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2019-159841 A (SUMITOMO HEAVY INDUSTRIES) 19 September 2019 (2019-09-19)<br>entire text, all drawings | 1-10 |
| A | JP 2015-34776 A (KOBE STEEL LTD) 19 February 2015 (2015-02-19)<br>entire text, all drawings | 1-10 |
| A | JP 2010-159848 A (RICOH CO LTD) 22 July 2010 (2010-07-22)<br>entire text, all drawings | 1-10 |
| A | JP 2-38930 A (TOYOTA MOTOR CORP) 08 February 1990 (1990-02-08)<br>entire text, all drawings | 1-10 |

☐ Further documents are listed in the continuation of Box C.          ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 September 2023** | **17 October 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/028937**

| Patent document cited in search report | | | Publication date (day/month/year) | Patent family member(s) | Publication date (day/month/year) |
|---|---|---|---|---|---|
| JP | 2019-159841 | A | 19 September 2019 | (Family: none) | |
| JP | 2015-34776 | A | 19 February 2015 | (Family: none) | |
| JP | 2010-159848 | A | 22 July 2010 | US 2010/0179772 A1 entire text, all drawings | |
| JP | 2-38930 | A | 08 February 1990 | (Family: none) | |

Form PCT/ISA/210 (patent family annex) (January 2015)

## EP 4 636 378 A1

**Patent documents cited in the description**

- JP 2022201123 A
- JP HEI7218333 A